# EUROPÄISCHE PATENTSCHRIFT

(11) **EP 1 402 995 B1**
(45) Veröffentlichungstag und Bekanntmachung des Hinweises auf die Patenterteilung: **31.08.2005**
(21) Anmeldenummer: 03016099.8
(22) Anmeldetag: 16.07.2003
(51) Int. Cl.: B23Q 3/00, B23Q 3/02, B23Q 1/00, B23Q 16/00

(54) **Spannvorrichtung**
Clamping device
Dispositif de serrage

(30) Priorität: 28.09.2002 DE 10245377
(43) Veröffentlichungstag der Anmeldung: 31.03.2004
(73) Patentinhaber: ALLMATIC-Jakob GmbH & Co. Spannsysteme KG, 87437 Kempten (DE)
(72) Erfinder: Milz, Pankraz, 87439 Kempten (DE)
(74) Vertreter: Schwarz, Thomas

(56) Entgegenhaltungen:
- DE-A- 3 309 555
- DE-A- 19 636 375
- DE-A- 19 934 835
- DE-A- 19 941 424
- US-A- 5 634 757
- US-A- 5 636 425

## Beschreibung

Die Erfindung betrifft eine Spannvorrichtung zur lösbaren Befestigung eines Werkstücks oder Werkstückträgers an Bearbeitungsmaschinen nach dem Oberbegriff des Anspruchs 1.

Eine derartige Spannvorrichtung ist aus der DE 199 34 835 A1 bekannt. Dort wird der an einer Palette befestigte Einzugsbolzen durch radial verschiebbare Kugeln innerhalb eines sogenannten Schnellspannzylinders fixiert. Die Kugeln greifen hierzu in einer Spannstellung in eine entsprechende Ringnut an der Außenseite des Einzugsbolzens ein. Die radiale Verschiebung der Kugeln zum Spannen und Lösen des Einzugsbolzens erfolgt über einen Hydraulikkolben, der durch eine Tellerfederanordnung in eine Spannstellung mit nach innen gedrückten Kugeln beaufschlagt wird. Zum Entriegeln des Einzugsbolzens innerhalb des Schnellspannzylinders muß der Druckkolben durch entsprechende Beaufschlagung mit Hydraulikfluid entgegen der Kraft der Tellerfederanordnung verschoben werden, wobei sich die Kugeln radial nach außen bewegen und außer Eingriff mit der Ringnut des Einzugsbolzens gelangen. Damit ist der Einzugsbolzen entgegen der Federkraft des Tellerfederpakets entriegelt. Bei einem derartigen Spannmechanismus treten jedoch aufgrund der kugelförmigen Spannelemente hohe Hertz'sche Pressungen an den Spannflächen auf, was zu entsprechend schnelleren Verschleißerscheinungen an den jeweiligen Bauteilen führen kann. Außerdem ist bei einer derartigen Spannvorrichtung eine gesonderte Hydraulikversorgung erforderlich.

Bei einer aus der DE 196 36 375 A1 bekannten weiteren Spannvorrichtung zur Befestigung von Paletten auf einer Bearbeitungsmaschine wird ein an der Unterseite einer Palette befestigter Einzugsbolzen innerhalb eines Gehäuses durch mehrere radial verschiebbare Verriegelungskolben fixiert, die in eine entsprechende Umfangsnut des Einzugsbolzens eingreifen. Die radialen Verriegelungskolben sind in einem inneren Ringkolben verschiebbar geführt und werden durch einen federbaufschlagten äußeren Ringkolben mit schrägen Druckflächen in die Umgangsnut des Einzugsbolzens gedrückt. Zum Lösen der Verriegelung werden die beiden Ringkolben mit Drucköl beaufschlagt und entgegen der Federkraft nach oben bewegt. Dabei werden die Verriegelungskolben radial nach außen verschoben und geben den Einzugsbolzen frei. Diese bekannte Spannvorrichtung weist eine konstruktiv aufwendige Kolben-Zylinder-Anordnung auf, die einen relativ großen Bauraum erfordert. Auch hier ist für die Betätigung der Spannvorrichtung eine gesonderte Druckversorgung erforderlich.

Aus der DE 199 41 424 C2 ist ferner eine Aufspannvorrichtung zum Aufspannen eines Werkstücks zwischen einer festen Wand und einem Werkstücktisch bekannt. Bei dieser Vorrichtung wird jedoch durch Verdrehung eines Druckkolbens keine Einzugskraft zum Einziehen eines Verbindungselements, sondern eine Druckkraft zum Ausfahren des Druckkolbens für die Anpressung des Werkstücks auf die Unterlage erzeugt. Außerdem erfolgt bei dieser bekannten Aufspannvorrichtung ein Zusammenstecken der Verbindungselemente nur bei der Montage und nicht bei jedem Spannvorgang, wie dies bei der erfindungsgemäßen Spannvorrichtung der Fall ist.

Aufgabe der Erfindung ist es, eine Spannvorrichtung der eingangs genannten Art zu schaffen, die bei einfachem technischen Aufbau und bei geringem Bauraum eine sichere und positionsgenaue, bei Bedarf auch schnell wieder lösbare Befestigung von Werkstücken oder Werkstückträgern an Bearbeitungsmaschinen ermöglicht.

Diese Aufgabe wird durch einen Spannvorrichtung mit den Merkmalen des Anspruchs 1 gelöst. Zweckmäßige Ausgestaltungen und vorteilhafte Weiterbildungen der Erfindung sind in den Unteransprüchen angegeben.

Die erfindungsgemäße Spannvorrichtung zeichnet sich durch eine äußerst kompakte Bauweise mit einem vergleichsweise kleinen Außendurchmesser und einer geringen Bauhöhe aus. Die Spannvorrichtung kann so besonders gut auch an Bearbeitungsmaschinen mit beschränktem Platzangebot eingesetzt werden. Übliche und gängige Schnittstellen können somit weitgehend beibehalten werden. Durch die relativ zueinander verdrehbaren Ansätze und Vorsprünge mit den in Eingriff bringbaren Keilflächen wird außerdem durch eine Art Drehkeilverbindung mit relativ einfachen konstruktiven Mitteln eine sichere und paßgenaue Fixierung auch schwerer Werkstücke ermöglicht. Zur Betätigung der Spannvorrichtung ist nur ein einfacher Drehantrieb erforderlich, der auf konstruktiv einfache und platzsparende Weise realisiert werden kann. Die nur wenigen Teile der Spannvorrichtung können außerdem relativ leicht gegen Verschmutzung oder eindringendes Kühlmittel geschützt werden, wodurch die Zuverlässigkeit und Lebensdauer der Spannvorrichtung verbessert wird.

In einer besonders zweckmäßigen Ausführung der Erfindung sind vier in Umfangsrichtung voneinander beabstandete verdrehbare Ansätze an dem einen Verbindungselement und vier dazu korrespondierende verdrehfeste Vorsprünge an dem anderen Verbindungselement mit zueinander korrespondierenden und durch gegenseitige Verdrehung miteinander in Kontakt gelangenden Keilflächen vorgesehen. In entsprechender Weise können aber auch nur zwei, drei oder mehr als vier Ansätze bzw. Vorsprünge vorhanden sein. Die Ansätze sind zweckmäßigerweise an einem innerhalb eines Maschinentischs oder einer anderen geeigneten Auflage der Bearbeitungsmaschine verdrehbar angeordneten Spannring einer Spannaufnahme und die dazugehörigen Vorsprünge an einem in den Spannring einführbaren Verbindungsbolzen angeordnet. Die Verdrehung des Spannaufnahme kann auf besonders einfache und platzsparende Weise durch einen in den Maschinentisch integrierten Spindel-Mutter-Antrieb über einen Gelenkhebel erfolgen. Selbstverständlich sind auch andere Drehantriebe möglich.

Weitere Besonderheiten und Vorzüge der Erfindung ergeben sich aus der folgenden Beschreibung eines Ausführungsbeispiels anhand der Zeichnung. Es zeigen:
- **Figur 1**: eine Schnittansicht einer Spannvorrichtung zur lösbaren Befestigung eines Werkstücks oder Werkstückträgers an einer Bearbeitungsmaschine im gelösten Zustand;
- **Figur 2**: einen Verbindungsbolzen der in Figur 1 gezeigten Spannvorrichtung in einer Unteransicht;
- **Figur 3**: eine zum Teil geschnittene Draufsicht auf eine Spannaufnahme der in Figur 1 gezeigten Spannvorrichtung in einer Lösestellung;
- **Figur 4**: eine Schnittansicht der in Figur 1 gezeigten Spannvorrichtung im gespannten Zustand und
- **Figur 5**: eine zum Teil geschnittene Draufsicht auf eine Spannaufnahme der in Figur 1 gezeigten Spannvorrichtung in einer Spannstellung.

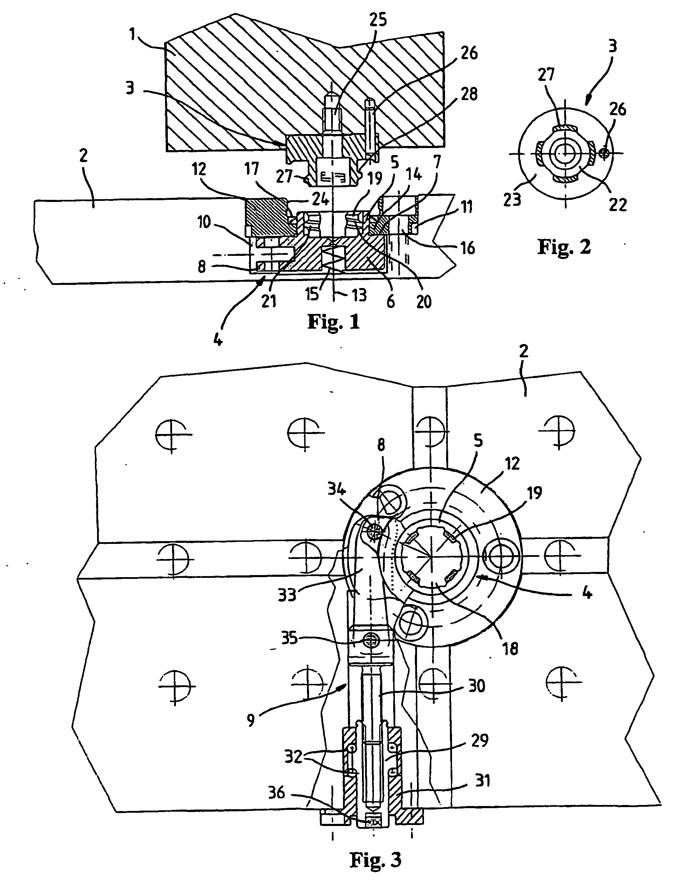

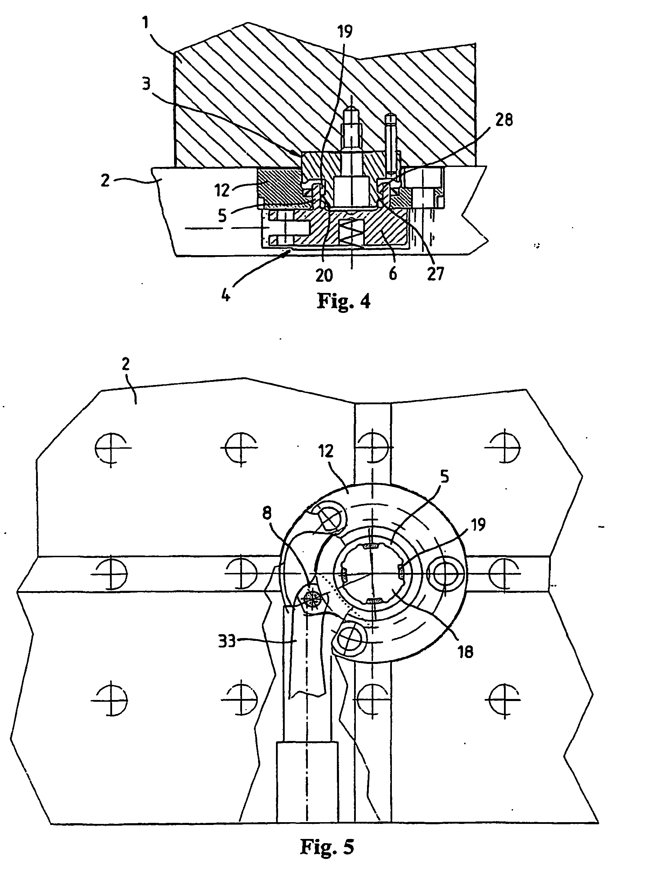

In den Figuren 1 und 4 ist eine Schnittansicht einer Spannvorrichtung zur lösbaren Befestigung eines Werkstücks bzw. Werkstückträgers 1 auf einem Maschinentisch 2 oder einer anderen geeigneten Auflage einer Bearbeitungsmaschine im gelösten bzw. gespannten Zustand gezeigt. Die Spannvorrichtung enthält als Verbindungselemente einen am Werkstück bzw. Werkstückträger 1 befestigten Verbindungsbolzen 3 und eine im Maschinentisch 2 integrierte verdrehbare Spannaufnahme 4, die einem mit dem Verbindungsbolzen 3 koppelbaren Spannring 5 und einem mit diesem einstückigen unteren Bund 6 mit einer ringförmigen oberen Anlagefläche 7 enthält. An dem Bund 6 ist ein seitlich vorstehendes Gelenkauge 8 für die Verbindung mit einer in Figur 3 dargestellten und im folgenden noch näher erläuterten Antrieb 9 zur Drehung der Spannaufnahme 4 angeformt.

Die Spannaufnahme 4 ist gemäß Figur 1 in einer entsprechenden Ausnehmung 10 des Maschinentisches 2 untergebracht und wird durch einen innerhalb einer Vertiefung 11 des Maschinentisches 2 befestigten Führungsring 12 um ihre Mittelachse 13 verdrehbar und in Spannrichtung axial gesichert geführt. Hierzu weist der Führungsring 12 an seiner Unterseite eine nach innen vorstehende Ringschulter 14 auf, an deren zylindrischen Innenwand der Spannring 5 radial geführt wird. Zur Sicherung in der axialen Spannrichtung liegt die Spannaufnahme 4 mit ihrer ringförmigen Anlagefläche 7 an der Unterseite des Führungsrings 12 an. Durch eine zwischen dem Boden der Ausnehmung 10 und der Unterseite der Spannaufnahme 4 eingespannte Druckfeder 15 wird die Spannaufnahme 4 in Richtung des Führungsrings 12 vorgespannt. Die Anlagefläche 7 der Spannaufnahme 4 und die Unterseite des Führungsrings 12 können zur leichteren Drehung beschichtet sein. Zwischen der Anlagefläche 7 und der Unterseite des Führungsrings 12 kann aber auch ein als Gleit- oder Wälzlager ausgeführtes Axiallager vorgesehen sein. Der Führungsring 12 weist zur Befestigung am Maschinentisch 2 mehrere in Umfangsrichtung voneinander beabstandete Durchgangsbohrungen 16 für geeignete Halteschrauben auf. Oberhalb der Ringschulter 14 ist zwischen dem Führungsring und dem Spannring 5 ein Dichtring 17 eingesetzt.

Wie besonders aus Figur 3 hervorgeht, sind an der Innenseite des Spannrings 5 vier um jeweils 90° zueinander winkelversetzte und durch Zwischenräume 18 voneinander getrennte Ansätze 19 angeordnet. Die nach innen vorstehenden Ansätze 19 weisen an ihrer Unterseite in Figur 1 erkennbare keilförmige Anlageflächen 20 auf. Diese Ansätze 19 sind bei der gezeigten Ausführung dadurch hergestellt, daß in dem Spannring 5 zunächst die vier Zwischenräume 18 z.B. durch einen Fingerfräser o.ä. hergestellt werden. Anschließend werden dann an der Innenseite der nach innen vorstehenden Abschnitte vier in Figur 1 erkennbare identische Gewindenuten 21 mit einer vorgegebenen Steigung und einem trapezförmigen Querschnitt zur Erzeugung voneinander getrennter Innengewindeabschnitte gefertigt.

Der in Figur 2 in einer Unteransicht gezeigte zylindrische Verbindungsbolzen 3 enthält einen in den Spannring 5 einführbaren unteren schlankeren Spannbereich 22 und einen oberen breiteren Führungsbereich 23, der zum paßgenauen Einsatz in einen oberen zylindrischen Aufnahmebereich 24 des Führungsrings 10 ausgebildet ist. Der Verbindungsbolzen 3 weist zu seiner Befestigung an dem Werkstück bzw. Werkstückträger 1 eine zentrale Durchgangsbohrung 25 für eine Befestigungsschraube auf. Über einen seitlichen Stift 26 wird eine Verdrehsicherung des Verbindungsbolzens 3 erreicht. An dem unteren Spannbereich 22 des Verbindungsbolzens 3 sind vier um jeweils 90° zueinander winkelversetzte und in Umfangsrichtung voneinander beabstandete Vorsprünge 27 mit einer oberen keilförmigen Anlagefläche 28 angeordnet. Bei der gezeigten Ausführung sind die Vorsprünge 27 des Verbindungsbolzens 3 in Form von identisch ausgeführten Außengewindeabschnitten mit einem jeweils auf derselben Höhe liegenden Gewindeanfang und derselben Steigung ausgeführt. Die auch auf jeweils derselben Höhe endenden Außengewindeabschnitte weisen ein trapezförmiges Profil zum Eingriff in die Gewindenuten 21 des Spannrings 5 auf.

Der Antrieb 9 zur Drehung der Spannaufnahme 4 ist bei der in Figur 3 gezeigten Ausführung als Spindel-Mutter-Antrieb mit einer tangential zur Spannaufnahme 4 verlaufenden und innerhalb einer Gewindebuchse 29 geführten Gewindespindel 30 ausgeführt. Die Gewindebuchse 29 ist innerhalb einer an der Seitenwand des Maschinentischs 2 eingesetzten Lagerhülse 31 in der Axialrichtung gesichert und über Drehlager 32 verdrehbar geführt. Das von der Gewindebuchse 29 nach innen vorstehende Ende der Gewindespindel 30 ist über einen Gelenkhebel 33 mit der Spannaufnahme 4 verbunden. Hierzu ist der Gelenkhebel 33 ist über einen ersten Gelenkbolzen 34 mit dem Gelenkauge 8 der Spannaufnahme 4 und über einen zweiten Gelenkbolzen 35 mit dem nach innen vorstehenden Ende der Gewindespindel 30 verbunden. An dem nach außen vorstehenden äußeren Ende der Gewindebuchse 29 ist ein Innenvierkant 36 zum Ansatz eines Spannwerkzeugs oder dgl. vorgesehen.

Zur Befestigung des Werkstücks oder Werkstückträgers 1 an dem Maschinentisch 2 wird der Verbindungsbolzen 3 bei der in den Figuren 1 und 3 gezeigten Lösestellung der Spannaufnahme derart eingesteckt, daß die nach außen vorstehenden Vorsprünge 27 am Verbindungsbolzen 3 in die Zwischenräume 18 des Spannrings 5 eingeführt werden. Wenn der Werkstückträger 1 mit seiner Unterseite zur Auflage auf der Oberseite des Maschinentischs 2 gelangt, sind die Vorsprünge 27 unterhalb der Ansätze 19 angeordnet und in der noch nicht verdrehten Lösestellung des Spannaufnahme 4 ist ein axiales Spiel zwischen den einander zugeordneten Anlageflächen 20 und 28 vorhanden. Erst durch anschließende Drehung des Spannaufnahme 4 in eine gemäß Figur 4 und 5 gezeigte Spannstellung gelangen die zunächst axial beabstandeten keilförmigen Anlageflächen 20 und 28 miteinander in Kontakt, so daß sich die Vorsprünge 27 mit ihren keilförmigen Anlageflächen 28 unter den Ansätzen 19 des Spannrings 5 verkeilen. Dabei wird eine axiale Einzugskraft erzeugt und der Werkstückträger 1 auf die Oberfläche des Maschinentischs 1 gepreßt. Durch eine Drehung der Spannaufnahme 4 in entgegengesetzter Richtung kann die Keilverbindung auf einfache Weise wieder gelöst werden.

Die Erfindung ist nicht auf das vorstehend beschriebene und in der Zeichnung dargestellte Ausführungsbeispiel beschränkt. So können z.B. anstelle des Spindel-Mutter-Antriebs auch andere geeignete Antriebe zur Verdrehung des Spannaufnahme zum Einsatz gelangen. Bei entsprechenden baulichen Gegebenheiten kann außerdem der Verbindungsbolzen auch am Maschinentisch und die dazugehörige Spannaufnahme in einem geeigneten Werkstückträger oder dgl. angeordnet sein.

## Patentansprüche

1. Spannvorrichtung zur lösbaren Befestigung eines Werkstücks oder Werkstückträgers an Bearbeitungsmaschinen mit zusammensteckbaren und durch Spannelemente (19, 27) miteinander verspannbaren Verbindungselementen (3, 4), **dadurch gekennzeichnet, daß** die Spannelemente (19, 27) aus mehreren in Umfangsrichtung durch Zwischenräume (18) voneinander getrennten Ansätzen (19) an dem einen Verbindungselement (4) und mehreren beim Zusammenstecken der Verbindungselemente (3, 4) in die Zwischenräume (18) einführbaren Vorsprüngen (27) an dem anderen Verbindungselement (3) bestehen, die durch gegenseitige Verdrehung nach dem Zusammenstecken miteinander in Eingriff bringbare keilfömige Anlageflächen (20, 28) zur Erzeugung einer axialen Einzugskraft aufweisen.

2. Spannvorrichtung nach Anspruch 1, **dadurch gekennzeichnet, daß** die Verbindungselemente (3, 4) aus einer innerhalb einer Auflage oder eines Maschinentischs (2) der Bearbeitungsmaschine verdrehbar angeordneten Spannaufnahme (4) und einem am Werkstück oder Werkstückträger (1) verdrehfest befestigten Verbindungsbolzen (3) bestehen.

3. Spannvorrichtung nach Anspruch 2, **dadurch gekennzeichnet, daß** die Ansätze (19) an der Innenseite eines Spannrings (5) der Spannaufnahme (4) und die dazugehörigen Vorsprünge (27) an der Außenseite des Verbindungsbolzens (3) angeordnet sind.

4. Spannvorrichtung nach einem der Ansprüche 1 bis 3, **dadurch gekennzeichnet, daß** die Ansätze (19) und die Vorsprünge (27) als Innen- bzw. Außengewindeabschnitte ausgebildet sind.

5. Spannvorrichtung nach einem der Ansprüche 1 bis 4, **dadurch gekennzeichnet, daß** die keilförmigen Anlageflächen (21) als Schraubflächen ausgebildet sind.

6. Spannvorrichtung nach einem der Ansprüche 1 bis 5, **dadurch gekennzeichnet, daß** die Ansätze (19) und die Vorsprünge (27) in Umfangsrichtung gleichwinklig voneinander beabstandet sind.

7. Spannvorrichtung nach einem der Ansprüche 2 bis 6, **dadurch gekennzeichnet, daß** die Spannaufnahme (4) durch einen Führungsring (12) in Spannrichtung axial gesichert und um ihre Mittelachse (13) verdrehbar in einer Ausnehmung (10) der Auflage oder des Maschinentischs (2) angeordnet ist.

8. Spannvorrichtung nach einem der Ansprüche 2 bis 6, **dadurch gekennzeichnet, daß** die Spannaufnahme (4) durch einen Antrieb (9) verdrehbar ist.

9. Spannvorrichtung nach Anspruch 8, **dadurch gekennzeichnet, daß** der Antrieb (9) in die Auflage oder den Maschinentisch (2) eingebaut ist.

10. Spannvorrichtung nach Anspruch 8 oder 9, **dadurch gekennzeichnet, daß** der Antrieb (9) als Spindel-Mutter-Antrieb mit einer tangential zu der Spannaufnahme (4) verlaufenden Gewindespindel (30) und einer innerhalb des Maschinentisch (2) verdrehbar geführten Gewindebuchse (29) ausgebildet ist.

11. Spannvorrichtung nach Anspruch 10, **dadurch gekennzeichnet, daß** die Gewindespindel (30) über einen Gelenkhebel (33) mit der Spannaufnahme (4) verbunden ist.

12. Spannvorrichtung nach Anspruch 10 oder 11, **dadurch gekennzeichnet, daß** die Gewindebuchse (29) innerhalb einer an der Seitenfläche des Maschinentischs (2) eingesetzten Lagerhülse (31) in Axialrichtung gesichert und über ein Drehlager (32) verdrehbar angeordnet ist.

## Claims

1. Clamping device for detachable fastening of a work piece or work piece carrier to processing machines with connecting elements (3, 4) which can be assembled together and clamped to one another by clamping elements (19, 27), **characterised in that** the clamping elements (19, 27) consist of a plurality of shoulders (19) which are located on one connecting element (4) and separated from one another in the circumferential direction by spaces (18), and of a plurality of projections (27) which are located on the other connecting element (3) and can be introduced into the spaces (18) when the connecting elements (3, 4) are assembled together and which exhibit wedge-shaped abutment faces (20, 28) which can be brought into engagement with one another by reciprocal turning after assembly to produce an axial inward drawing force.

2. Clamping device according to claim 1, **characterised in that** the connecting elements (3, 4) consist of a chuck (4) which is arranged rotatably inside a support or a machine table (2) of the processing machine, and of a connecting bolt (3) which is fastened to the work piece or work piece carrier (1) so that it cannot turn.

3. Clamping device according to claim 2, **characterised in that** the shoulders (19) are arranged on the inside of a clamping ring (5) of the chuck (4) and the associated projections (27) are arranged on the outside of the connecting bolt (3).

4. Clamping device according to one of claims 1 to 3, **characterised in that** the shoulders (19) and the projections (27) are embodied as internally and externally threaded portions respectively.

5. Clamping device according to one of claims 1 to 4, **characterised in that** the wedge-shaped abutment faces (21) are embodied as screw faces.

6. Clamping device according to one of claims 1 to 5, **characterised in that** the shoulders (19) and the projections (27) are spaced apart from one another in the circumferential direction by the same angle.

7. Clamping device according to one of claims 2 to 6, **characterised in that** the chuck (4) is secured axially by a guide ring (12) in the clamping direction and arranged so as to be rotatable about its central axis (13) in a recess (10) in the support or the machine table (2).

8. Clamping device according to one of claims 2 to 6, **characterised in that** the chuck (4) can be rotated by a drive (9).

9. Clamping device according to claim 8, **characterised in that** the drive (9) is incorporated in the support or the machine table (2).

10. Clamping device according to claim 8 or 9, **characterised in that** the drive (9) is embodied as a spindle and nut drive with a threaded spindle (30) running tangentially to the chuck (4) and a threaded bush (29) which is guided rotatably inside the machine table (2).

11. Clamping device according to claim 10, **characterised in that** the threaded spindle (30) is connected to the chuck (4) by means of an articulated lever (33).

12. Clamping device according to claim 10 or 11, **characterised in that** the threaded bush (29) is secured in the axial direction inside a bearing sleeve (31) inserted in the side face of the machine table (2), and arranged rotatedly by means of a pivot mounting (32).

## Revendications

1. Dispositif de serrage pour fixer de manière amovible une pièce à usiner ou un support de pièce à usiner sur des machines-outils, comprenant des éléments de liaison (3, 4) emboîtables et pouvant être fixés l'un à l'autre par des éléments de serrage (19, 27), **caractérisé en ce que** les éléments de serrage (19, 27) sont composés de plusieurs embases (19) situées sur l'un des éléments de liaison (4) et séparées les unes des autres dans la direction du pourtour par des intervalles (18) et de plusieurs saillies (27) situées sur l'autre élément de liaison (3) et pouvant être insérées dans les intervalles (18) lors de l'emboîtement des éléments de liaison (3, 4), qui présentent des surfaces de contact (20, 28) en forme de coin pouvant être mises en prise l'une avec l'autre en les faisant tourner l'une par rapport à l'autre après les avoir emboîtées, afin de créer une force d'ancrage axiale.

2. Dispositif de serrage selon la revendication 1, **caractérisé en ce que** les éléments de liaison (3, 4) sont composés d'un réceptacle de serrage (4) placé dans un support ou une table de machine-outil (2) de manière à pouvoir tourner et d'un tirant d'assemblage (3) immobilisé en rotation sur la pièce à usiner ou sur le support de pièce à usiner (1).

3. Dispositif de serrage selon la revendication 2, **caractérisé en ce que** les embases (19) sur la face intérieure d'une bague de serrage (5) du réceptacle de serrage (4) et les saillies (27) qui y sont associées sont disposées sur la face extérieure du tirant d'assemblage (3).

4. Dispositif de serrage selon l'une des revendications 1 à 3, **caractérisé en ce que** les embases (19) et les saillies (27) sont respectivement réalisées en tant que segments taraudés et segments filetés.

5. Dispositif de serrage selon l'une des revendications 1 à 4, **caractérisé en ce que** les surfaces de contact en forme de coin (21) sont réalisées en tant que surfaces de vissage.

6. Dispositif de serrage selon l'une des revendications 1 à 5, **caractérisé en ce que** les embases (19) et les saillies (27) présentent un espacement isogone dans la direction du pourtour.

7. Dispositif de serrage selon l'une des revendications 2 à 6, **caractérisé en ce que** le réceptacle de serrage (4) est assuré axialement par une bague de guidage (11) dans le sens de serrage et est disposé dans un évidement (10) du support ou de la table de machine-outil (2) de manière à pouvoir tourner autour de son axe médian (13).

8. Dispositif de serrage selon l'une des revendications 2 à 6, **caractérisé en ce que** le réceptacle de serrage (4) peut tourner au moyen d'une commande (9).

9. Dispositif de serrage selon la revendication 8, **caractérisé en ce que** la commande (9) est intégrée dans le support ou la table de machine-outil (2).

10. Dispositif de serrage selon la revendication 8 ou 9, **caractérisé en ce que** la commande (9) est réalisée en tant que commande à broche et écrou avec une broche filetée (30) s'étendant tangentiellement au réceptacle de serrage (4) et un manchon taraudé (29) guidé de manière rotative à l'intérieur de la table de machine-outil (2).

11. Dispositif de serrage selon la revendication 10, **caractérisé en ce que** la broche filetée (30) est reliée au réceptacle de serrage (4) par le biais d'un levier articulé (33).

12. Dispositif de serrage selon la revendication 10 ou 11, **caractérisé en ce que** le manchon taraudé (29) est monté dans une douille de palier (3 1) insérée dans une surface latérale de la table de machine-outil (2), de manière à être fixe dans la direction axiale et à pouvoir tourner par le biais d'un coussinet de pivotement (32).
